# EUROPÄISCHE PATENTSCHRIFT

(11) **EP 2 803 106 B1**
(45) Veröffentlichungstag und Bekanntmachung des Hinweises auf die Patenterteilung: **28.09.2016**
(21) Anmeldenummer: 12822970.5
(22) Anmeldetag: 15.12.2012
(51) Int. Cl.: H01M 8/247, H01M 8/248, H01M 8/24, H01M 8/02, H01M 8/10, H01M 8/12, H01M 8/0276, H01M 8/2475, H01M 8/1018, H01M 8/124

(54) **BRENNSTOFFZELLENSTAPEL**
FUEL CELL STACK
EMPILEMENT DE PILES À COMBUSTIBLE

(30) Priorität: 10.01.2012 DE 102012000266
(43) Veröffentlichungstag der Anmeldung: 19.11.2014
(73) Patentinhaber: Daimler AG, 70327 Stuttgart (DE)
(72) Erfinder: GÜNTHART, Matthias, 5000 Aarau (CH); KOBLER, Pius, 8037 Zürich (CH); MEX, Ulf-Michael, 70190 Stuttgart (DE); STARK, Holger, 71573 Allmersbach im Tal (DE); WERNER, Uwe, 8825 Hütten (CH)
(74) Vertreter: JENSEN & SON
(86) Internationale Anmeldenummer: PCT/EP2012/005179
(87) Internationale Veröffentlichungsnummer: WO 2013/104395

(56) Entgegenhaltungen:
- DE-A1- 19 649 691
- US-A- 5 993 987
- US-A1- 2011 123 882

## Beschreibung

Die Erfindung betrifft einen Brennstoffzellenstapel gemäß dem Oberbegriff des Patentanspruchs 1.

In der US 2003/0104260 A1 ist ein Brennstoffzellensystem mit einem Gehäuse beschrieben, welches zumindest einen ersten Brennstoffzellenstapel und einen peripher zu dem ersten Brennstoffzellenstapel angeordneten zweiten Brennstoffzellenstapel umschließt und diese miteinander verpresst. Dazu umfasst das Brennstoffzellensystem Spannbänder, welche vollständig um das Gehäuse herum verlaufen. Weiterhin kann das Gehäuse ein Abdeckelement aufweisen, welches gegenüber dem Gehäuse abgedichtet ist.

Weiterhin ist in der US 2003/0104260 A1 ein Gehäuse zum Aufnehmen und Halten eines Brennstoffzellenstapels während der Herstellung einer Brennstoffzellenvorrichtung aus einer Mehrzahl von Brennstoffzellenstapel beschrieben, welches ein Abschlusselement, eine flexible Seitenwand und ein Verbindungselement umfasst, wobei das Gehäuse von Spannbändern zusammengehalten wird. Darüber hinaus sind Verfahren zur Herstellung der Brennstoffzellenvorrichtung beschrieben, umfassend das Stapeln der Brennstoffzellen in dem Behältnis, Verpressen der Brennstoffzellen, und Anordnen des Verbindungselements zum Festhalten des Brennstoffzellenstapels in der gestapelten Anordnung, und/oder um den Brennstoffzellenstapel zumindest teilweise zu verpressen.

Aus der deutschen Offenlegungsschrift DE 19649691 A1 geht ein Brennstoffzellenstapel mit Stapelabschlusselementen hervor, der in einem Gehäuse mechanisch fest, gasdicht und elektronisch isolierend angeordnet ist.

In dem Dokument US 2011/0123882 A1 wird ein Brennstoffzellenstapel offenbart, welcher aus einer Mehrzahl von gestapelten Brennstoffzelleneinheiten und zumindest einem Stapelabschlusselement gebildet ist. Die gestapelten Brennstoffzelleneinheiten und das Stapelabschlusselement sind mittels einer Spannvorrichtung verspannt. Ferner sind zumindest die verspannten Brennstoffzelleneinheiten von einem Gehäuse umschlossen. Zwischen dem Gehäuse und dem mindestens einen Stapelabschlusselement ist eine Dichtung angeordnet, insbesondere eine Lippendichtung.

Der Erfindung liegt die Aufgabe zu Grunde, ein gegenüber dem Stand der Technik verbesserten Brennstoffzellenstapel anzugeben.

Die Aufgabe wird erfindungsgemäß gelöst durch einen Brennstoffzellenstapel, welcher die in Anspruch 1 angegebenen Merkmale aufweist.

Vorteilhafte Ausgestaltungen der Erfindung sind Gegenstand der Unteransprüche.

Ein Brennstoffzellenstapel ist aus einer Mehrzahl von gestapelten Brennstoffzelleneinheiten und zumindest einem Stapelabschlusselement gebildet. Die gestapelten Brennstoffzelleneinheiten und das Stapelabschlusselement sind mittels mindestens einer Spannvorrichtung verspannt, wobei die verspannten Brennstoffzelleneinheiten mittels eines Gehäuses umschlossen sind. Erfindungsgemäß ist zwischen dem Gehäuse und dem mindestens einen Stapelabschlusselement eine umlaufende Dichtung, insbesondere Lippendichtung, angeordnet, die Aussparungen zur Aufnahme der Spannvorrichtung aufweist, wobei die Spannvorrichtung zumindest im Bereich der Aussparungen elektrisch isoliert ist.

Die beispielsweise als Lippendichtung ausgebildete Dichtung und die elektrisch isolierte Spannvorrichtung wirken in vorteilhafter Art und Weise dichtend zusammen und verhindern somit ein Eindringen von Feuchtigkeit in den Bereich zwischen Brennstoffzellenstapel und Gehäuse. Die Kombination von Spannvorrichtung zum Verspannen des Brennstoffzellenstapels und Abdichtung des Stapelabschlusselements gegenüber dem Gehäuse ermöglicht weiterhin eine einfache und kostengünstige Herstellung eines Dichtsystems für den Brennstoffzellenstapel und eine Bauraumeinsparung.

Zur elektrischen Isolierung der Spannvorrichtung ist dabei an diese eine Isolierung angeformt, vorzugsweise angespritzt, z.B. mittels eines Spritzgussverfahrens. Die Isolierung ist dabei besonders bevorzugt im Bereich des Gehäuses an die Spannvorrichtung angeformt, so dass eine elektrische Isolierung benachbarter Brennstoffzelleneinheiten verbessert ist.

Zur formschlüssigen Aufnahme der Spannvorrichtung korrespondieren Form und/oder die Abmessungen der Aussparungen mit Form und/oder äußeren Abmessungen der an die Spannvorrichtung angeformten Isolierung, so dass eine Montage des Brennstoffzellenstapels auf einfache Art und Weise erfolgt und die dichtende Wirkung während des Betriebs des Brennstoffzellenstapels sichergestellt ist.

Vorzugsweise ist die Isolierung der Spannvorrichtung im Bereich der Aussparungen derart ausgebildet, dass eine form- und/oder kraftschlüssige Verbindung zwischen der Isolierung der Spannvorrichtung und der insbesondere als Lippendichtung ausgebildeten Dichtung des Stapelabschlusselements und damit besonders bevorzugt eine Vorspannung hergestellt ist, welche eine Dichtwirkung zur Lippendichtung und damit zum Gehäuse bewirkt. Zur Verstärkung der Vorspannung weist die Isolierung der Spannvorrichtung bereichsweise, insbesondere im Bereich der Aussparungen, eine Verdickung auf.

Zur Optimierung der Dichtwirkung der Isolierung der Spannvorrichtung und der Dichtung sind diese aus einem Kautschuk, einem Schaumstoff, Polyvinylchlorid, thermoplastischen Polyurethan und/oder einem thermoplastischen Polymer gebildet. Diese elektrisch isolierenden Werkstoffe zeichnen sich durch eine hohe chemische Beständigkeit, Temperaturbeständigkeit und gute Korrosionseigenschaften aus.

Die Spannvorrichtung umfasst dabei zumindest ein die gestapelten Brennstoffzelleneinheiten und das Stapelabschlusselement umlaufendes streifen- oder bandförmiges Spannband. Ein derartiges Spannband weist ein nur geringes Gewicht und einen geringen Bauraumbedarf auf und ist darüber hinaus einfach und kostengünstig in der Herstellung sowie in der Montage. Besonders bevorzugt umfasst die Spannvorrichtung mehrere Spannbänder, wodurch in vorteilhafter Art und Weise ein Verpressen des Brennstoffzellenstapels optimiert und eine Dichtwirkung zwischen Brennstoffzellenstapel und Gehäuse erhöht wird.

Das Spannband ist in einer besonders bevorzugten Ausgestaltung der Erfindung aus Glasfaser oder Edelstahl gebildet. Werkstoffe aus Glasfaser und Edelstahl sind korrosionsbeständig und chemisch resistent, insbesondere Glasfaserwerkstoffe weisen zudem ein hohes Elastizitätsmodul auf.

Besonders bevorzugt bildet das Stapelabschlusselement des Brennstoffzellenstapels einen Deckel des Gehäuses, welches insbesondere als ein einseitig offenes Gehäuse ausgebildet ist. Damit ist ein Bauraum- und Bauteilbedarf des Brennstoffzellenstapels optimiert. Das Stapelabschlusselement erfüllt damit mehrere Funktionen, in dem es sowohl als stirnseitige Begrenzung der gestapelten Brennstoffzelleneinheiten als auch als Abdeckelement des Brennstoffzellenstapels dient.

Alternativ oder zusätzlich ist das Gehäuse als ein zweiseitig offenes Gehäuse ausgebildet und der Brennstoffzellenstapel umfasst zwei Stapelabschlusselemente, wobei eines der Stapelabschlusselemente den Deckel und das andere der Stapelabschlusselemente den Boden des Brennstoffzellenstapels bildet.

Ausführungsbeispiele der Erfindung werden im Folgenden anhand von Zeichnungen näher erläutert.

Dabei zeigen:
- Fig. 1: schematisch eine perspektivische Ansicht eines Ausschnitts eines Brennstoffzellenstapels mit einem Gehäuse, einem Stapelabschlusselement und einer Spannvorrichtung mit einer angeformten Isolierung,
- Fig. 2: schematisch eine perspektivische Ansicht des Ausschnitts gemäß Figur 1 ohne Spannvorrichtung,
- Fig. 3: schematisch eine perspektivische Ansicht des Ausschnitts gemäß Figur 1 ohne Spannvorrichtung und ohne Isolierung,
- Fig. 4: schematisch eine perspektivische Ansicht einer Spannvorrichtung mit einer angeformten Isolierung und
- Fig. 5: schematisch eine perspektivische Ansicht eines Brennstoffzellenstapels in einem montierten Zustand, und
- Fig. 6: schematisch eine perspektivische Ansicht des Brennstoffzellenstapels gemäß Figur 5, wobei der Brennstoffzellenstapel mit einem Gehäuse versehen wird.

Einander entsprechende Teile sind in allen Figuren mit den gleichen Bezugszeichen versehen.

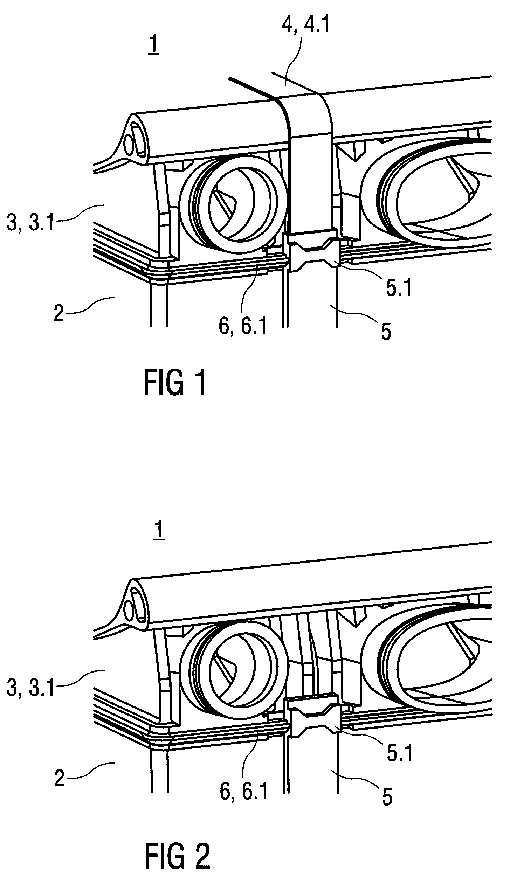

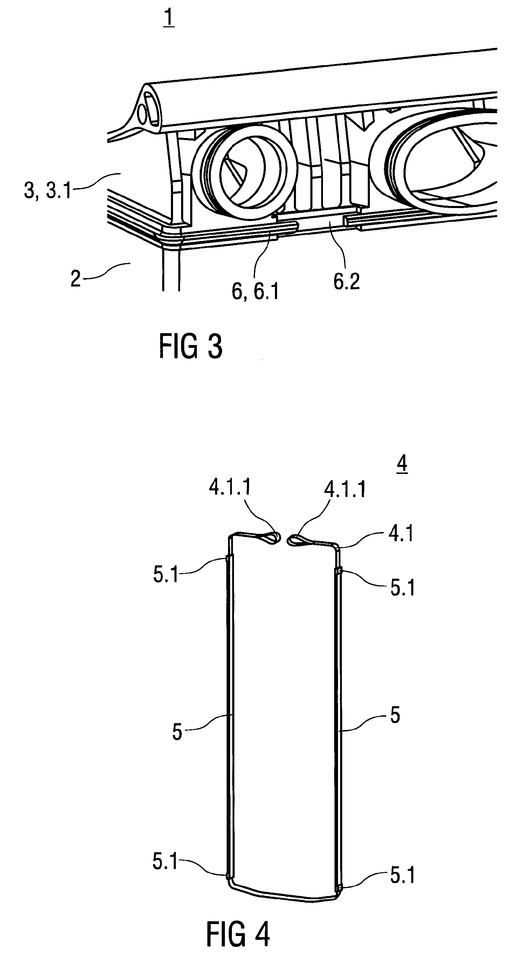

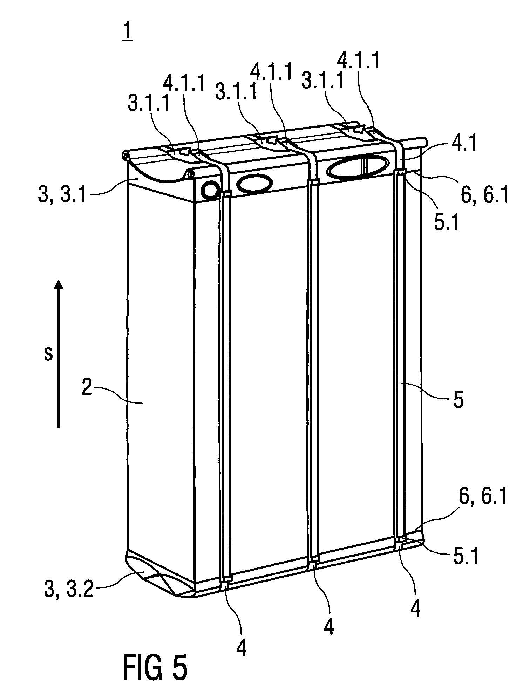

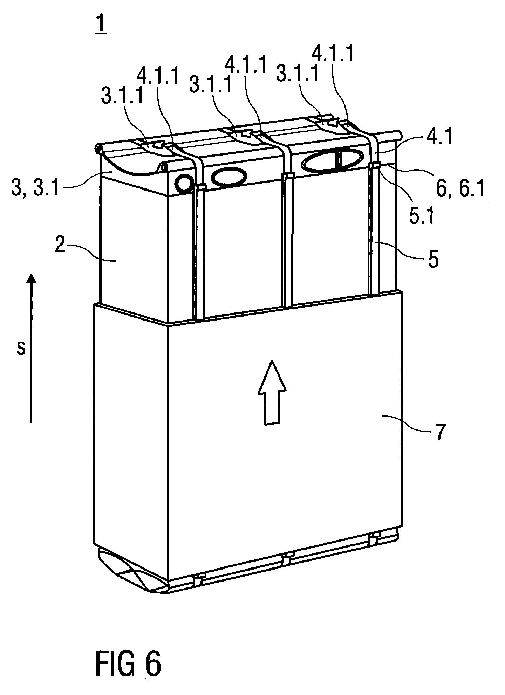

In den Figuren 1 bis 3 ist ein perspektivischer Ausschnitt eines Brennstoffzellenstapels 1 mit einer Mehrzahl gestapelter Brennstoffzelleneinheiten 2, zwei Stapelabschlusselemente 3 und einer Spannvorrichtung 4 mit einer diese bereichsweise umgebenden Isolierung 5 gezeigt, wobei Figur 2 den Brennstoffzellenstapel 1 nur mit Isolierung 5 ohne Spannvorrichtung 4 und Figur 3 den Brennstoffzellenstapel 1 ohne Spannvorrichtung 4 und ohne Isolierung 5 zeigt. Figur 4 zeigt perspektivisch eine einzelne Spannvorrichtung 4, Figur 5 einen Brennstoffzellenstapel 1 in einem montierten Zustand und Figur 6 den Brennstoffzellenstapel 1 gemäß Figur 5, welcher mit einem Gehäuse 7 versehen wird, wobei die Montage des Gehäuses 7 mittels eines Pfeils dargestellt ist.

Der Brennstoffzellenstapel 1 besteht aus der Mehrzahl der gestapelten Brennstoffzelleneinheiten 2, welche beispielsweise als Hochtemperatur-Brennstoffzelleneinheiten, z.B. Festoxidbrennstoffzellen, oder auch Niedertemperatur-Brennstoffzelleneinheiten, beispielsweise Polymerelektrolytbrennstoffzellen, ausgebildet sind, wobei Polymerelektrolytbrennstoffzellen (PEMFC) bevorzugt sind.

Die gestapelten Brennstoffzelleneinheiten 2 und die Stapelabschlusselemente 3 sind mittels der Spannvorrichtung 4 miteinander verspannt. Die Spannvorrichtung 4 weist dazu, wie in Figur 5 dargestellt, mehrere, insbesondere drei band- oder streifenförmige Spannelemente, im Folgenden als Spannbänder 4.1 bezeichnet, auf, welche die Brennstoffzelleneinheiten 2 und die Stapelabschlusselemente 3 jeweils umlaufen und diese gegeneinander verspannen und welche in einer quer zur Stapelrichtung s verlaufenden Richtung voneinander beabstandet sind. Derartig ausgebildete Spannbänder 4.1 weisen ein nur geringes Gewicht und einen geringen Bauraumbedarf auf und sind darüber hinaus einfach und kostengünstig in der Herstellung sowie in der Montage. Darüber hinaus ermöglicht eine solche Ausbildung und Anordnung der Spannvorrichtung 4 eine optimale Krafteinleitung in den Brennstoffzellenstapel 1.

Wie in Figur 4 dargestellt, erstrecken sich die Spannbänder 4.1 um eines der Stapelabschlusselemente 3, insbesondere die untere Endplatte 3.2, herum. Die Enden oder Endbereiche 4.1.1 der Spannbänder 4.1 sind schleifen- oder hakenförmig ausgebildet oder mit Einhängeschleifen oder Einhängehaken versehen. Die der unteren Endplatte 3.2 gegenüberliegende obere Endplatte 3.1 weist Verbindungselemente 3.1.1 auf, die korrespondierend zu den schleifen- oder hakenförmigen Endbereichen 4.1.1 der Spannbänder 4.1 ausgebildet sind, so dass diese miteinander eine form- und/oder kraftschlüssige Verbindung eingehen.

Die Verbindungselemente 3.1.1 sind in einer möglichen Ausführungsform separat ausgebildet und form-, stoff- und/oder kraftschlüssig mit dem Stapelabschlusselement 3 verbunden, insbesondere verschraubt. Alternativ können die Verbindungselemente 3.1.1 in das Stapelabschlusselement 3 integriert, z.B. angeformt, sein. Insbesondere können die Verbindungselemente 3.1.1 und das Stapelabschlusselement 3 ein integriertes Bauteil, z. B. ein Formbauteil, bilden. Beispielsweise sind die Verbindungselemente 3.1.1 als eine in eine Öffnung des Stapelabschlusselements 3 ragende Schleife oder ein in die Öffnung ragender Haken ausgeformt.

Durch Ausbildung der Endbereiche 4.1.1 der Spannbänder 4.1 als Haken oder Schleifen können die Spannbänder 4.1 auf einfache Art und Weise von dem korrespondierend ausgebildeten Verbindungselement 3.1.1 des Stapelabschlusselements 3 gelöst werden.

Mittels der Spannbänder 4.1 sind die Stapelabschlusselemente 3 und die Brennstoffzelleneinheiten 2 im montierten Zustand des Brennstoffzellenstapels 1 gegeneinander verspannt, da die Spannbänder 4.1 Zugkräfte für die Verspannung des Brennstoffzellenstapels 1 über diesen an die gestapelten Brennstoffzelleneinheiten 2 und an die Stapelabschlusselemente 3 übertragen.

Die gestapelten Brennstoffzelleneinheiten 2 sind dabei vorzugsweise von dem in Figur 6 dargestellten Gehäuse 7 zumindest abschnittsweise umschlossen. Vorzugsweise sind alle in dem Brennstoffzellenstapel 1 gestapelten Brennstoffzelleinheiten 2 von dem Gehäuse 7 umschlossen (nicht dargestellt). Das Gehäuse 7 ist als beidseitig offenes Gehäuse 7 ausgebildet und schließt im montierten Zustand (die Montage des Gehäuses 7 ist in Figur 6 mittels eines Pfeils dargestellt) mit seinen offenen Enden an jeweils ein Ende oder eine Oberflächenseite eines Stapelabschlusselements 3 an, wobei eines der Stapelabschlusselemente 3 eine obere Stirnseite des Brennstoffzellenstapels 1 in Form einer oberen Endplatte 3.1 begrenzt und das andere der Stapelabschlusselemente 3 eine untere Stirnfläche des Brennstoffzellenstapels 1 in Form einer unteren Endplatte 3.2 begrenzt.

Besonders bevorzugt bildet die obere Endplatte 3.1 einen Deckel und die untere Endplatte 3.2 einen Boden des Gehäuses 7. Alternativ kann das Gehäuse 7 auch als einseitig offenes Gehäuse 7 ausgebildet sein, wobei das offene Ende durch eines der Stapelabschlusselemente 3 begrenzt ist.

Vorzugsweise ist zumindest eines der Stapelabschlusselemente 3 einteilig im Kunststoff-Spritzgussverfahren als Metall-Kunststoff-Hybridbauteil hergestellt.

Die Ausbildung des Stapelabschlusselements 3 als Metall-Kunststoff-Hybridbauteil ermöglicht die Kombination positiver Eigenschaften zweier verschiedener Werkstoffe. Mittels des Metallteils sind dabei Verspannkräfte großflächig in die Brennstoffzelleneinheiten einleitbar und Anbindungspunkte zu Tragstrukturen, z.B. Fahrzeugkarosserie, realisierbar. Zudem sind eine Form- und Temperaturstabilität des Metallteils sehr gut. Als Metallwerkstoff eignet sich dabei auch eine metallische Legierung, wie z.B. Stahl.

Mittels eines an das Metallteil angeformten Versteifungsteils ist eine elektrische Isolation des Brennstoffzellenstapels 1 gegen die Umwelt realisierbar. Weiterhin ist mittels des Versteifungsteils eine Schnittstelle zu dem Gehäuse 7 des Brennstoffzellenstapels 1, eine Ab- und Zuleitung gasförmiger oder flüssiger Medien aus beziehungsweise in den Brennstoffzellenstapel 1 sowie eine Isolation von Medien sowohl elektrisch als auch zum Schutz vor Korrosion realisierbar. Das Versteifungsteil optimiert damit das Metallteil. Als Kunststoff bzw. organisches Polymer eignet sich insbesondere ein Thermoplast.

Zwischen dem Gehäuse 7 und der oberen Endplatte 3.1 ist eine umlaufende Dichtung 6 angeordnet, insbesondere angespritzt. In einer möglichen, dargestellten Ausführungsform ist die umlaufende Dichtung 6 als eine Lippendichtung 6.1 ausgeführt. Alternativ kann sie als eine Ringdichtung ausgebildet sein.

Damit ist die obere Endplatte 3.1 in bevorzugter Art und Weise gegenüber dem Gehäuse 7 abgedichtet. Besonders bevorzugt ist zwischen der unteren Endplatte 3.2 und dem Gehäuse 2 eine weitere Lippendichtung 6.1 angeordnet, so dass die untere Endplatte 3.2 gegenüber dem Gehäuse 7 abgedichtet ist.

Die Lippendichtung 6.1 ist vorzugsweise aus einem elektrisch isolierenden Material, insbesondere aus Synthesekautschuk, wie z.B. Äthylen-Propylen-Dien-Monomer, Nitril-Butadien-Kautschuk, hydrierter Nitril-Kautschuk, Silikon-Kautschuk, Fluor-Kautschuk, Acrylat-Kautschuk, Perfluor-Kautschuk, Polychloroprenkautschuk, Chlorsulfonyl-Polyäthylen-Kautschuk, Polyester-Urethan-Kautschuk, Butyl-Kautschuk, oder NaturKautschuk oder Zellkautschuk, Schaumstoff, Polyvinylchlorid, thermoplastischen Elastomer oder thermoplastischen Polyurethan gebildet. Diese elektrisch isolierenden Werkstoffe zeichnen sich durch eine hohe chemische Beständigkeit, Temperaturbeständigkeit und gute Korrosionseigenschaften aus.

Die Lippendichtung 6.1 umfasst im vorliegenden Ausführungsbeispiel Aussparungen 6.2 zur Aufnahme der Spannbänder 4.1, welche von dem Gehäuse 7 im Bereich der Brennstoffzelleneinheiten 2 umschlossen sind und im Bereich der Lippendichtung 6.1 außenliegend angeordnet sind.

Die Spannbänder 4.1 weisen dazu zumindest jeweils im Bereich der Aussparungen 6.2 der Lippendichtung 6.1 die angeformte Isolierung 5 auf. Bevorzugt erstreckt sich die Isolierung 5 über den Bereich der Spannbänder 4.1, der an den Brennstoffzelleneinheiten 2 anliegt, wie in den Figuren 4 und 5 dargestellt, so dass eine elektrische Isolierung benachbarter Brennstoffzelleneinheiten 2 verbessert ist.

Die Aussparungen 6.2 weisen vorzugsweise eine zur Form und/oder zu äußeren Abmessungen der Isolierung 5 korrespondierende Form bzw. Abmessungen auf, so dass die Isolierung 5 form -und/oder kraftschlüssig in der Aussparung 6.2 angeordnet ist, wodurch besonders bevorzugt eine Vorspannung und damit eine Dichtwirkung zur Lippendichtung 6.1 und zum Gehäuse 7 hergestellt ist. Zur Verstärkung der Vorspannung weist die Isolierung 5 im Bereich der Aussparungen 6.2 eine Verdickung 5.1 auf, die in Figuren 1, 2, 4, 5 und 6 gezeigt ist.

Die Isolierung 5 ist vorzugsweise aus dem gleichen Werkstoff wie die Lippendichtung 6.1 oder einem anderen der bereits genannten Werkstoffe für die Lippendichtung 6.1 gebildet. Die Isolierung 5 wird vorzugsweise mittels eines Spritzgussverfahrens auf das Spannband 4.1 aufgebracht. Im vorliegenden Ausführungsbeispiel umschließt die Isolierung 5 das Spannband 4.1 in den vorgegebenen Bereichen vollständig.

Weiterhin sind jeweils für ein Spannband 4.1 zwei sich gegenüberliegende Aussparungen 6.2 vorgesehen, da die Spannbänder 4.1 zumindest das Gehäuse 2 und die Lippendichtung 6.1 entlang einer in Stapelrichtung s verlaufenden Richtung umlaufend angeordnet sind. In einer alternativen oder zusätzlichen Ausgestaltung weist eine zwischen dem Gehäuse 2 und dem anderen der Stapelabschlusselemente 3, beispielsweise die untere Endplatte 3.2, angeordnete Lippendichtung 6.1 entsprechende Aussparungen 6.2 zur Aufnahme der Spannbänder 4.1 auf.

Die Isolierung 5 und die Lippendichtung 6.1 wirken in vorteilhafter Art und Weise dichtend zusammen und verhindern somit ein Eindringen von Feuchtigkeit in den Bereich zwischen Stapelabschlusselement 3 und Gehäuse 7. Die Kombination von Spannvorrichtung 4 zum Verspannen des Brennstoffzellenstapels 1 und der Abdichtung ermöglicht weiterhin eine einfache und kostengünstige Herstellung eines Dichtsystems für den Brennstoffzellenstapel 1, da keine Fügevorgänge notwendig sind, und zudem Bauraum eingespart ist.

Darüber hinaus kann das Dichtsystem unabhängig von einer Stapelhöhe des Brennstoffzellenstapels 1 verwendet werden.

### Bezugszeichenliste

- 1: Brennstoffzellenstapel
- 2: Brennstoffzelleneinheiten
- 3: Stapelabschlusselemente
- 3.1: obere Endplatte
- 3.1.1: Verbindungselemente
- 3.2: untere Endplatte
- 4: Spannvorrichtung
- 4.1: Spannbänder
- 4.1.1: Endbereiche
- 5: Isolierung
- 5.1: Verdickung
- 6: Dichtung
- 6.1: Lippendichtung
- 6.2: Aussparungen
- 7: Gehäuse

- s: Stapelrichtung

## Patentansprüche

1. Brennstoffzellenstapel (1), welcher aus einer Mehrzahl von gestapelten Brennstoffzelleneinheiten (2) und zumindest einem Stapelabschlusselement (3) gebildet ist, wobei die gestapelten Brennstoffzelleneinheiten (2) und das Stapelabschlusselement (3) mittels einer Spannvorrichtung (4) verspannt sind, und wobei die verspannten Brennstoffzelleneinheiten (2) von einem Gehäuse (7) umschlossen sind,
**dadurch gekennzeichnet, dass** zwischen dem Gehäuse (7) und dem mindestens einen Stapelabschlusselement (3) eine umlaufende Dichtung (6), insbesondere Lippendichtung (6.1), angeordnet ist, die Aussparungen (6.2) zur Aufnahme der Spannvorrichtung (4) aufweist, wobei die Spannvorrichtung (4) zumindest im Bereich der Aussparungen (6.2) elektrisch isoliert ist.

2. Brennstoffzellenstapel (1) nach Anspruch 1,
**dadurch gekennzeichnet, dass** an die Spannvorrichtung (4) zumindest abschnittsweise eine Isolierung (5) angeformt ist.

3. Brennstoffzellenstapel (1) nach Anspruch 2,
**dadurch gekennzeichnet, dass** die Isolierung (5) bereichsweise, insbesondere im Bereich der Aussparungen (6.2), eine Verdickung (5.1) aufweist.

4. Brennstoffzellenstapel (1) nach einem der Ansprüche 2 bis 3,
**dadurch gekennzeichnet, dass** die Isolierung (5) aus einem Kautschuk, einem Schaumstoff, Polyvinylchlorid, thermoplastischen Polyurethan und/oder einem thermoplastischen Polymer gebildet ist.

5. Brennstoffzellenstapel (1) nach einem der Ansprüche 1 bis 4,
**dadurch gekennzeichnet, dass** die Dichtung (6) aus einem Kautschuk, einem Schaumstoff, Polyvinylchlorid, thermoplastischen Polyurethan und/oder einem thermoplastischen Polymer gebildet ist.

6. Brennstoffzellenstapel (1) nach einem der vorhergehenden Ansprüche,
**dadurch gekennzeichnet, dass** die Spannvorrichtung (4) zumindest ein die gestapelten Brennstoffzelleneinheiten (2) und das Stapelabschlusselement (3) umlaufendes Spannband (4.1) umfasst.

7. Brennstoffzellenstapel (1) nach Anspruch 6,
**dadurch gekennzeichnet, dass** das Spannband (4.1) aus Glasfaser oder Edelstahl gebildet ist.

8. Brennstoffzellenstapel (1) nach einem der vorhergehenden Ansprüche,
**dadurch gekennzeichnet, dass** das zumindest eine Stapelabschlusselement (3) einen Deckel des Gehäuses (7) bildet.

9. Brennstoffzellenstapel (1) nach Anspruch 8,
**gekennzeichnet durch** zwei Stapelabschlusselemente (3), wobei das eine der Stapelabschlusselemente (3) den Deckel des Gehäuses (7) und das andere der Stapelabschlusselemente (3) den Boden des Gehäuses (7) bildet.

## Claims

1. Fuel cell stack (1) consisting of a plurality of stacked fuel cell units (2) and at least one stack terminating element (3), wherein the stacked fuel cell units (2) and the stack terminating element (3) are clamped by means of a clamping device (4) and wherein the clamped fuel cell units (2) are enclosed by a housing (7),
**characterised in that** a continuous seal (6), in particular a lip seal (6.1), having recesses (6.2) for the accommodation of the clamping device (4) is located between the housing (7) and the at least one stack terminating element (3), the clamping device (4) being electrically insulated at least in the region of the recesses (6.2).

2. Fuel cell stack (1) according to claim 1,
**characterised in that** an insulation (5) is integrally formed on at least some sections of the clamping device (4).

3. Fuel cell stack (1) according to claim 2,
**characterised in that** the insulation (5) has a thickening (5.1) in some regions, in particular in the region of the recesses (6.2).

4. Fuel cell stack (1) according to claim 2 or 3,
**characterised in that** the insulation (5) is made of a rubber, a foam material, polyvinyl chloride, thermoplastic polyurethane and/or a thermoplastic polymer.

5. Fuel cell stack (1) according to any of claims 1 to 4,
**characterised in that** the seal (6) is made of a rubber, a foam material, polyvinyl chloride, thermoplastic polyurethane and/or a thermoplastic polymer.

6. Fuel cell stack (1) according to any of the preceding claims,
**characterised in that** the clamping device (4) comprises at least one retaining strap (4.1), which runs around the stacked fuel cell units (2) and the stack terminating element (3).

7. Fuel cell stack (1) according to claim 6,
**characterised in that** the retaining strap (4.1) is made of glass fibre or stainless steel.

8. Fuel cell stack (1) according to any of the preceding claims,
**characterised in that** the at least one stack terminating element (3) forms a cover of the housing (7).

9. Fuel cell stack (1) according to claim 8,
**characterised by** two stack terminating elements (3), wherein one of the stack terminating elements (3) forms the cover of the housing (7) and the other of the stack terminating elements (3) forms the base of the housing (7).

## Revendications

1. Empilement (1) de piles à combustible qui est formé à partir d'une pluralité d'unités de piles à combustible (2) empilées et d'au moins un élément (3) de fermeture d'empilement, les unités (2) de piles à combustible empilées et l'élément (3) de fermeture d'empilement sont serrées au moyen d'un dispositif de serrage (4), et les unités (2) de piles à combustible sont renfermées dans un boîtier, **caractérisé en ce que** entre le boîtier (7) et l'au moins un élément (3) de fermeture d'empilement est disposé un joint d'étanchéité (6), en particulier un joint à lèvre (6.1) qui comprend les évidements (6.2) destinés à loger le dispositif de serrage (4), le dispositif de serrage (4) étant électriquement isolé au moins dans la zone des évidements (6.2).

2. Empilement (1) de piles à combustible selon la revendication 1, **caractérisé en ce que** sur le dispositif de serrage (4) est formée au moins partiellement une isolation (5).

3. Empilement (1) de piles à combustible selon la revendication 2, **caractérisé en ce que** l'isolation (5) à certains endroits, en particulier dans la zone des évidements (6.2) présente un gonflement (5.1).

4. Empilement (1) de piles à combustible selon l'une quelconque des revendications 2 à 3, **caractérisé en ce que** l'isolation (5) est constituée d'un caoutchouc, d'une mousse, d'un polychlorure de vinyle, d'un polyuréthane thermoplastique et/ou d'un polymère thermoplastique.

5. Empilement (1) de piles à combustible selon l'une quelconque des revendications 1 à 4, **caractérisé en ce que** le joint d'étanchéité (6) est constitué d'un caoutchouc, d'une mousse, d'un polychlorure de vinyle, d'un polyuréthane thermoplastique et/ou d'un polymère thermoplastique.

6. Empilement (1) de piles à combustible selon l'une quelconque des revendications précédentes, **caractérisé en ce que** le dispositif de serrage (4) comprend au moins une bande de serrage (4.1) entourant les unités (2) de piles à combustible et l'élément (3) de fermeture d'empilement.

7. Empilement (1) de piles à combustible selon la revendication 6, **caractérisé en ce que** la bande de serrage (4.1) est constituée de fibres de verre ou d'acier inoxydable.

8. Empilement (1) de piles à combustible selon l'une quelconque des revendications précédentes, **caractérisé en ce que** l'au moins un élément (3) de fermeture d'empilement forme un couvercle du boîtier (7).

9. Empilement (1) de piles à combustible selon la revendication 8, **caractérisé par** deux éléments (3) de fermeture d'empilement, l'une des éléments (3) de fermeture d'empilement forme le couvercle du boîtier (7) et l'autre des éléments (3) de fermeture d'empilement forme le fond du boîtier (7).
